# EUROPEAN PATENT APPLICATION

(11) **EP 4 199 615 A1**
(43) Date of publication of application: **21.06.2023**
(21) Application number: 20949557.1
(22) Date of filing: 14.08.2020
(51) Int. Cl.: H04W 72/04, H04W 52/02

(54) **TERMINAL, BASE STATION, AND MONITORING METHOD**

(71) Applicant: NTT DOCOMO, INC., Tokyo 100-6150 (JP)
(72) Inventor: OHARA, Tomoya, Tokyo 100-6150 (JP)
(74) Representative: Hoffmann Eitle
(86) International application number: PCT/JP2020/030919
(87) International publication number: WO 2022/034695

(57) **Abstract**

Provided is a terminal including: a receiving unit that receives a notification of a minimum scheduling offset value from a base station; and a control unit that skips PDCCH monitoring in a period based on the minimum scheduling offset value after the receiving unit receives a PDCCH.

## Description

### [Technical Field]

The present invention relates to a terminal and a base station in a radio communication system.

### BACKGROUND ART

In 3rd generation partnership project (3GPP), an examination of a radio communication scheme called 5G or new radio (NR) (hereinafter, the radio communication scheme will be referred to as "NR") is in progress to realize a further increase in a system capacity, a further increase in a data transmission speed, a further reduction in delay in a radio section, and the like. In 5G, various radio technologies and network architectures have been examined to satisfy a requirement that delay of a wireless section is set to 1 ms or less while realizing a throughput of 10 Gbps or greater.

In addition, in NR, cross-slot scheduling capable of scheduling a PDSCH or a PUSCH of a slot different from a slot including a PDCCH by the PDCCH that is received by a terminal in an arbitrary slot is possible. In the cross-slot scheduling, a value of K0 (DL scheduling slot offset) or K2 (UL scheduling slot offset) which is greater than 0 is designated by the terminal.

### CITATION LIST

### NON-PATENT DOCUMENT

Non-Patent Document 1: 3GPP TS 38.331 V16.1.0 (2020-07)
Non-Patent Document 2: 3GPP TS 38.212 V16.2.0 (2020-06)

### SUMMARY OF THE INVENTION

### PROBLEM TO BE SOLVED BY THE INVENTION

In standardization (3GPP RAN Rel-17), as Rel-17 UE Power Saving Enhancements for NR, various examinations relating to power saving of a terminal are in progress.

With regard to power saving, in Rel-16 NR, it is possible to set a minimum scheduling offset (for K0 or K2) before actually performing scheduling. In a terminal in which the minimum scheduling offset is set, it is not assumed scheduling is performed by a slot offset in a value smaller than the minimum scheduling offset.

According to this, the terminal can know in advance a period during which PDSCH/PUSCH is not scheduled, and terminal sleep is sufficiently secured, and thus power consumption can be reduced.

However, depending on PDCCH monitoring configuration (search space configuration), PDCCH monitoring may occur during the period in which the PDSCH/PUSCH configured with the minimum scheduling offset is not scheduled. During the time, the terminal cannot sleep, and frequently transitions a sleep state and a non-sleep state, and thus the effect of reducing the power consumption may be weakened.

The invention has been made in consideration such circumstances, and an object thereof is to provide a technology capable of reducing power consumption that occurs due to PDCCH monitoring in a terminal.

### MEANS FOR SOLVING PROBLEM

According to a technology of the present disclosure, there is provided a terminal including:
a receiving unit that receives a notification of a minimum scheduling offset value from a base station; and
a control unit that skips PDCCH monitoring in a period based on the minimum scheduling offset value after receiving PDCCH by the receiving unit.

### EFFECT OF THE INVENTION

According to the technology of the present disclosure, a technology capable of reducing power consumption that occurs due to PDCCH monitoring in a terminal is provided.

### BRIEF DESCRIPTION OF DRAWINGS

[Fig.1] Fig. 1 is a view for describing a radio communication system in an embodiment of the invention;
[Fig.2] Fig. 2 is a view for describing a radio communication system in the embodiment of the invention;
[Fig.3] Fig. 3 is a view illustrating a basic operation example;
[Fig.4] Fig. 4 is a view illustrating an example of cross-slot scheduling;
[Fig.5] Fig. 5 is a view for describing a problem;
[Fig.6] Fig. 6 is a view for describing Example 1-1;
[Fig.7] Fig. 7 is a view for describing Example 1-1;
[Fig.8] Fig. 8 is a view for describing Example 2;
[Fig.9] Fig. 9 is a view for describing Example 3-1;
[Fig.10] Fig. 10 is a view for describing Example 3-2;
[Fig.11] Fig. 11 is a view for describing Example 3-3;
[Fig.12] Fig. 12 is a view for describing Example 3-3;
[Fig.13] Fig. 13 is a view for describing Example 3-3;
[Fig.14] Fig. 14 is a view for describing Example 4;
[Fig.15] Fig. 15 is a view for describing Example 4;
[Fig.16] Fig. 16 is a view for describing Example 5;
[Fig.17] Fig. 17 is a view illustrating an example of a functional configuration of a base station 10 in the embodiment of the invention;
[Fig.18] Fig. 18 is a view illustrating an example of a functional configuration of a terminal 20 in the embodiment of the invention; and
[Fig.19] Fig. 19 is a view illustrating an example of a hardware configuration of the base station 10 or the terminal 20 in the embodiment of the invention.

### MODE(S) FOR CARRYING OUT THE INVENTION

Hereinafter, embodiments of the invention will be described with reference to the accompanying drawings. Note that, the following embodiments are illustrative only, and embodiments to which the invention is applied are not limited to the following embodiments.

In an operation of a radio communication system of embodiments of the invention, an existing technology is appropriately used. For example, the existing technology is existing NR, but there is no limitation to the existing NR.

In addition, in this specification, terminologies such as a PUSCH, a PDCCH, an RRC, and a DCI which are used in specifications of existing NR or LTE are used, but terminologies expressed as a channel name, a protocol name, a signal name, a function name, and the like which are used in this specification may be called by other names.

### (System Configuration)

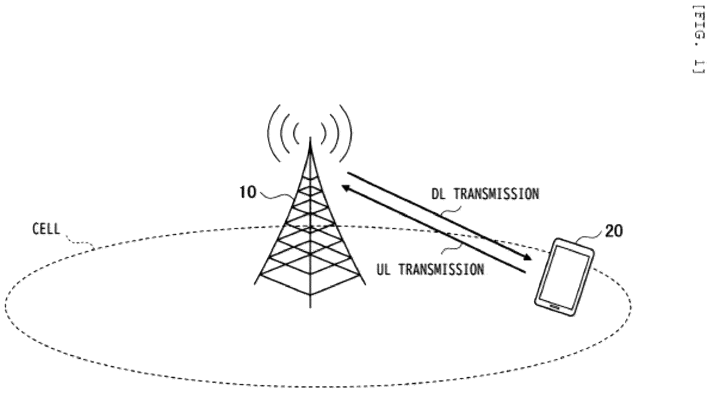

Fig. 1 is a view for describing a radio communication system in an embodiment of the invention. As illustrated in Fig. 1, the radio communication system in the embodiment of the invention includes a base station 10 and a terminal 20. In Fig. 1, one piece of the base station 10 and one piece of the terminal 20 are illustrated, but this is an example, and a plurality of the base stations 10 and a plurality of the terminals 20 may be provided.

The base station 10 is a communication device that provides one or more cells, and performs radio communication with the terminal 20. A physical resource of a radio signal is defined by a time domain and a frequency domain, the time domain may be defined by the number of OFDM symbols, and the frequency domain may be defined by the number of subcarriers and the number of resource blocks. In addition, a transmission time interval (TTI) in the time domain may be a slot, and the TTI may be a subframe.

The base station 10 transmits a synchronization signal, system information, and the like to the terminal 20. Examples of the synchronization signal include NR-PSS and NR-SSS. For example, the system information is transmitted with an NR-PBCH or a PDSCH and is also referred to as broadcast information. As illustrated in Fig. 1, the base station 10 transmits a control signal or data to the terminal 20 with a downlink (DL), and receives the control signal or the data from the terminal 20 with an uplink (UL). Note that, here, something transmitted with a control channel such as a PUCCH and the PDCCH is called a control signal, and something transmitted with a share channel such as the PUSCH and the PDSCH is called data, but the calling method is an example.

The terminal 20 is a communication device such as a smart phone, a portable telephone, a tablet, a wearable terminal, and a communication module for machine-to-machine (M2M) which have a radio communication function. As illustrated in Fig. 1, the terminal 20 receives a control signal or data from the base station 10 with the DL and transmits the control signal or the data to the base station 10 with the UL to use various communication services provided by the radio communication system. Note that, the terminal 20 may be referred to as UE and the base station 10 may be referred to as gNB.

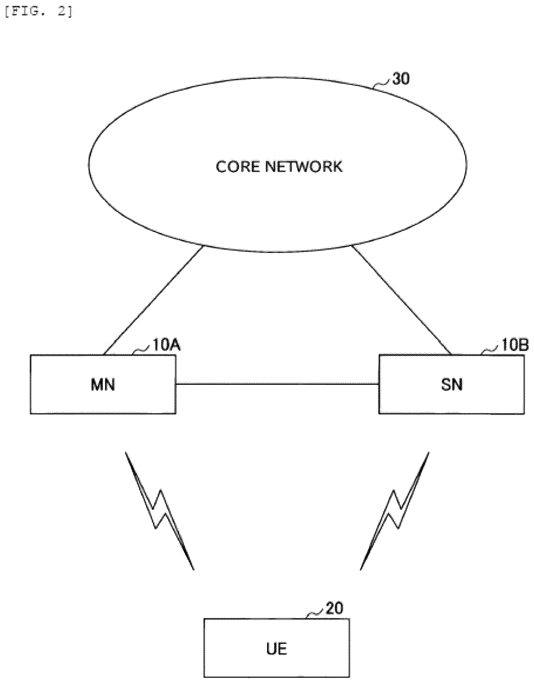

Fig. 2 illustrates a configuration example of the radio communication system in a case where dual connectivity (DC) is executed. As illustrated in Fig. 2, a base station 10A that becomes a master node (MN) and a base station 10B that becomes a secondary node (SN) may be provided. The base station 10A and the base station 10B are respectively connected to a core network. The terminal 20 can perform communication with both the base station 10A and the base station 10B.

A cell group provided by the base station 10A that is the MN is referred to as a master cell group (MCG) and a cell group provided by the base station 10B that is SN is referred to as a secondary cell group (SCG).

A processing operation in this embodiment may be executed by the system configuration illustrated in Fig. 1, may be executed by the system configuration illustrated in Fig. 2, or may be executed by a system configuration other than the system configurations.

### (Basic Operation Example)

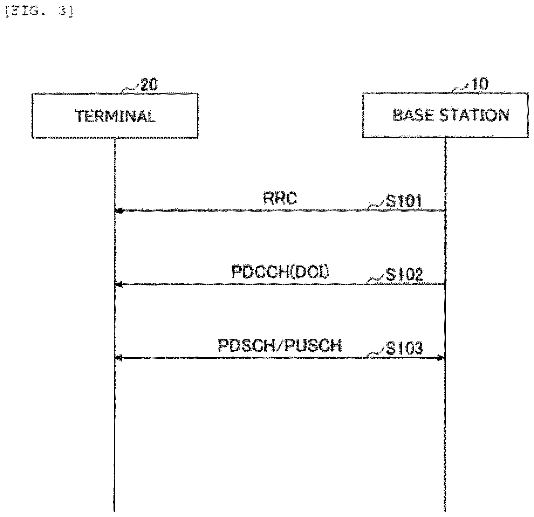

A basic operation example of the radio communication system in this embodiment will be described with reference to Fig. 3. In S101, the terminal 20 receives an RRC message transmitted from the base station 10. In the RRC message, for example, minimumSchedulingOffsetKO or minimumSchedulingOffsetK2 to be described later is included.

In S102, the terminal 20 receives a DCI transmitted from the base station 10 with the PDCCH and decodes the DCI.

In S103, the terminal 20 performs transmission of data with the PUSCH or reception of data with the PDSCH in accordance with scheduling information of the DCI. Note that, reception of the DCI with the PDCCH may be noted as "PDCCH is received". In addition, transmission of data with the PUSCH may be noted as "PUSCH is transmitted", or reception of data with the PDSCH may be noted as "PDSCH is received".

In the radio communication system of this embodiment, cross-slot scheduling is possible. Specifically, the terminal 20 can grasp a slot in which PDSCH reception/PUSCH transmission is scheduled by K0 (in a case of the PDSCH) or K2 (in a case of the PUSCH) designated as time domain resource allocation information in the DCI received from the base station 10.

Note that, K0 is an offset (the number of slots) between a slot that receives a DCI for scheduling the PDSCH is received, and a slot in which the PDSCH is scheduled, and K2 is an offset (the number of slots) between a slot that receives DCI for scheduling the PUSCH and a slot in which the PUSCH is scheduled. In a case where K0/K2 is greater than 0, the cross-slot scheduling occurs.

In this embodiment, a minimum scheduling offset (for K0 or K2) can be configured before scheduling is actually performed with the DCI in the terminal 20. In the terminal 20 in which the minimum scheduling offset is configured, it is not assumed that scheduling occurs by K0/K2 that is a value smaller than the minimum scheduling offset. According to this, the terminal 20 can know a period during which the PDSCH/PUSCH is not scheduled in advance, and sleep of the terminal 20 is sufficiently secured, and thus power consumption can be reduced.

With regard to configuration of the minimum scheduling offset by the RRC, and application of the minimum scheduling offset by the DCI, the radio communication system of this embodiment has the same function as the function in Rel-16 NR.

That is, as described in Non-Patent Document 1, minimumSchedulingOffsetKO is set for PDSCH scheduling and minimumSchedulingOffsetK2 is set for PUSCH scheduling by RRC signaling with respect to the terminal 20 from the base station 10.

The minimumSchedulingOffsetKO is included in PDSCH-Config information element, and the minimumSchedulingOffsetK2 is included in PUSCH-Config information element.

As each of the minimumSchedulingOffsetKO and the minimumSchedulingOffsetK2, two values among 0 to 16 can be set to the maximum.

Which value to apply among values configured by the minimumSchedulingOffsetKO/minimumSchedulingOffsetK2 is designated by a DCI.

Specifically, as described in Non-Patent Document 2, any one between maximum two values capable of being configured by the RRC parameter is given in notification (or in a case where only one value is set by the RRC, a set value or 0 is given in notification) by a minimum applicable scheduling offset indicator included in a DCI format 1_1 that schedules the PDSCH or a DCI format 0_1 that schedules the PUSCH.

The terminal 20 applies a minimum scheduling offset value after defined delay from timing at which the minimum applicable scheduling offset indicator is received by the DCI. The terminal 20 does not assume a scheduling offset (K0 or K2) smaller than an applied value. As long as a different value is not given in notification in accordance with the DCI, the applied minimum scheduling offset value is continuously applied. However, in a case where assumed RRC configuration is changed due to BWP transition, cell transition, idle/inactive transition, or the like, configuration related to the minimum scheduling offset value is changed.

For example, the base station 10 does not perform scheduling in which a scheduling offset (K0 or K2) smaller than the minimum scheduling offset value applied to the terminal 20 is used.

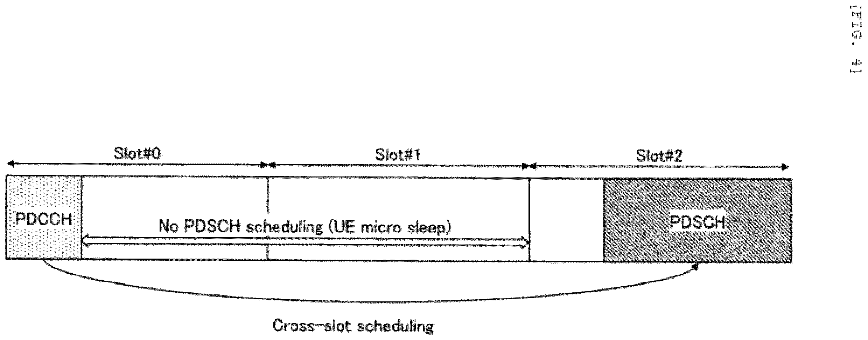

Fig. 4 illustrates an example of the cross-slot scheduling in the PDSCH when two slots are configured by the minimum applicable scheduling offset indicator. In the example illustrated in Fig. 4, the terminal 20 receives the minimum applicable scheduling offset indicator by a PDCCH that is received previously to PDCCH of a slot #0, and at the point of time of receiving the PDCCH of the slot #0, two slots are applied as the minimum scheduling offset value. The terminal 20 knows that the PDSCH is not received in the slot #0 and a slot #1, it is not necessary to prepare a receiver resource for PDSCH reception and decoding (with a wide band and a large amount of data). Accordingly, power consumption can be reduced.

### (With Regard to Problem)

Depending on configuration of PDCCH monitoring (configuration of a search space), PDCCH monitoring may occur in a period during which the PDSCH/PUSCH configured by the minimum applicable scheduling offset indicator is not scheduled.

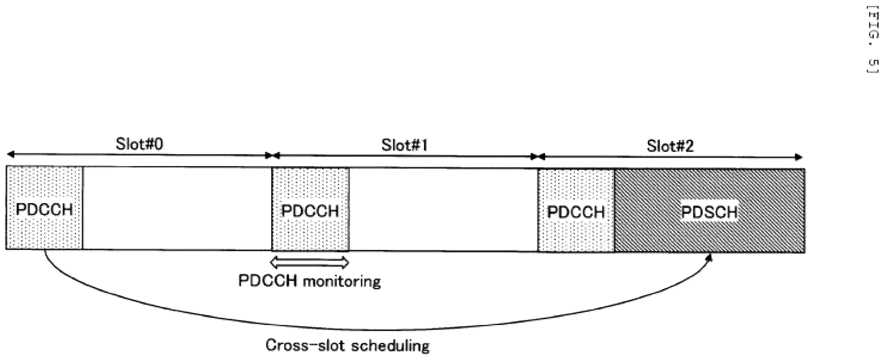

For example, in Fig. 5 illustrating an example in which two slots are configured by the minimum applicable scheduling offset indicator, in a slot #1 in a period during which the PDSCH is not scheduled, PDCCH monitoring occurs.

The terminal 20 cannot sleep when performing the PDCCH monitoring. In addition, when the PDCCH monitoring occurs in a slot in a period during which the PDSCH is not scheduled, the terminal 20 frequently transitions a sleep state and a non-sleep state from each other, and thus the effect of reducing the power consumption may be weakened.

Hereinafter, Examples 1 to 5 will be described as an operation example related to this embodiment for solving the above-described problem. Examples 1 to 5 can be executed in an arbitrary combination as long as contradiction does not occur.

Note that, monitoring of the PDCCH represents monitoring of a corresponding search space, attempting to decode a demodulated signal with RNTI, and investigating whether or not decoding of DCI is successful.

In addition, in drawings used in the following description, a slot starts from #0, but this is an example. In addition, with regard to scheduling, scheduling of the PDSCH is illustrated as an example, but an operation according to the invention is also true of the PUSCH.

### (Example 1)

Example 1 will be described. First, in S101 in Fig. 3, the terminal 20 receives minimumSchedulingOffsetKO by RRC scheduling in S101. For example, two values greater than 0 are set in the minimumSchedulingOffsetKO.

In S102 in Fig. 3, the terminal 20 receives a notification of the minimum applicable scheduling offset indicator by the PDCCH from the base station 10, and initiates application of a minimum scheduling offset value that is given in notification by an indicator from a slot after a defined period (for example, from a slot after one or two slots subsequent to a slot that receives the PDCCH). As described above, application of the minimum scheduling offset value that is given in notification by the indicator continues as long as another minimum scheduling offset value different from the minimum scheduling offset value is not given in notification by DCI.

In Example 1, in a case of receiving the PDCCH in a period to which an arbitrary minimum scheduling offset value is applied, the terminal 20 skips PDCCH monitoring after the PDCCH in correspondence with the applied minimum scheduling offset value. Here, "in a case of receiving the PDCCH" represents a case where the terminal 20 succeeds in reception and decoding of DCI by performing PDCCH monitoring.

Hereinafter, an operation example related to PDCCH monitoring skip will be described in detail with reference to Example 1-1 and Example 1-2.

### <Example 1-1>

In Example 1-1, after receiving the PDCCH, the terminal 20 performs counting from a slot that receives the PDCCH, and skips the PDCCH monitoring to the end of slots corresponding to the number of slots having the minimum scheduling offset value applied.

Note that, for example, "after receiving the PDCCH" represents "from a point of time at which decoding of DCI is terminated". In addition, "after receiving the PDCCH" may represent "from a point of time at which the terminal 20 can recognize CRC that is scrambled by RNTI to be decoded. In addition, "after receiving the PDCCH" may represent "immediately after a physical resource of the PDCCH".

In addition, in a definition of specifications corresponding to "after receiving the PDCCH", it may be defined in an aspect of "after an X symbol (or a Y slot) from the end of a physical resource of the PDCCH).

That is, after receiving the PDCCH, the terminal 20 skips the PDCCH monitoring to the end of a slot immediately before the slot in which the PDSCH scheduling is possible by the received PDCCH.

For example, the minimum scheduling offset value applied is a value set by the minimum applicable scheduling offset indicator, but there is no limitation thereto.

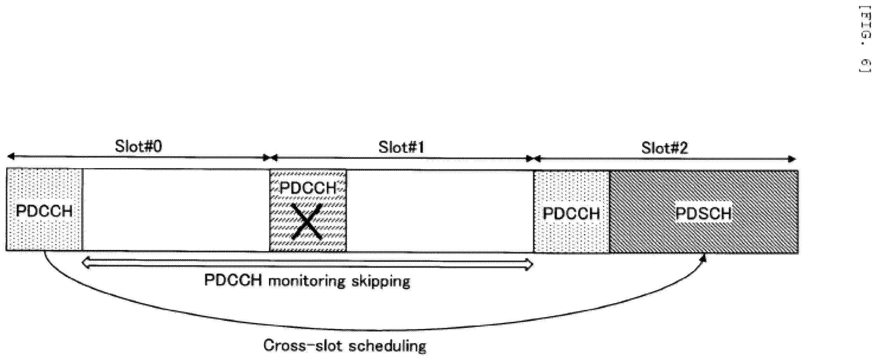

An example will be described with reference to Fig. 6. In Fig. 6, two slots are applied as the minimum scheduling offset value at a point of time of the slot #0 by the minimum applicable scheduling offset indicator received by a slot before the slot #0.

The terminal 20 receives the PDCCH at a head portion of the slot #0. The head portion of the slot #0 does not correspond to a PDCCH monitoring skip period, and thus the terminal 20 receives the PDCCH.

Since the terminal 20 grasps that the applied minimum scheduling offset value is two slots, and thus the terminal 20 determines that the PDCCH monitoring is skipped from immediately after receiving the PDCCH in the slot #0 to the end of the slot #1.

In the example in Fig. 6, for example, the head portion of the slot #1 corresponds to timing at which PDCCH monitoring corresponding to a search space, which is set for the terminal 20 as a search space to be monitored, is to be performed, but the terminal 20 determines that the timing corresponds a period during which the PDCCH monitoring is skipped, and thus the terminal 20 does not perform the PDCCH monitoring even at the timing.

### <Example 1-2>

In Example 1-2, after receiving the PDCCH, the terminal 20 performs counting from a slot receiving the PDCCH, and skips the PDCCH monitoring to the end of a slot subsequent to slots corresponding to the number of slots having the minimum scheduling offset value applied. "After receiving the PDCCH" is as described in Example 1-1.

That is, after receiving the PDCCH, the terminal 20 skips the PDCCH monitoring up to the end of a slot at which the PDSCH can be scheduled by the received PDCCH.

In the slot at which the PDSCH can be scheduled by the received PDCCH, only the PDCCH monitoring of a predetermined position (for example, the head) may be skipped, or the PDCCH monitoring of the entirety of the slot may be skipped.

For example, the minimum scheduling offset value that is applied is a setting value by the minimum applicable scheduling offset indicator, but there is no limitation thereto.

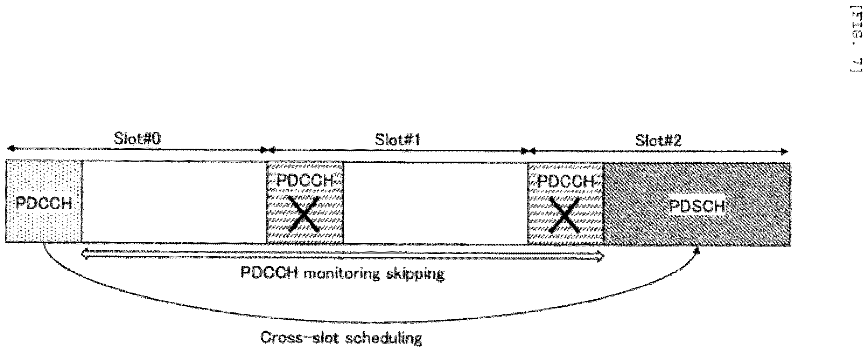

An example will be described with reference to Fig. 7. In Fig. 7, two slots are applied as the minimum scheduling offset value at a point of time of a slot #0 by the minimum applicable scheduling offset indicator received at a slot before the slot #0.

The terminal 20 receives the PDCCH at a head portion of the slot #0. The head portion of the slot #0 does not correspond to a PDCCH monitoring skip period, and thus the terminal 20 receives the PDCCH.

Since the terminal 20 grasps that the minimum scheduling offset value applied is two slots, the terminal 20 determines that the PDCCH monitoring is skipped from immediately after receiving the PDCCH at the slot #0 to the end of a slot #2 (or to a predetermined symbol of the head).

In the example in Fig. 7, for example, the head portion of the slot #1 and the head portion of the slot #2 correspond to timing at which PDCCH monitoring corresponding to a search space, which is set for the terminal 20 as a search space to be monitored, is to be performed, but the terminal 20 determines that the timing corresponds a period during which the PDCCH monitoring is skipped, and thus the terminal 20 does not perform the PDCCH monitoring even at the timing.

### (Example 2)

Example 2 is premised on Example 1. However, Example 2 may be premised on Example 3, 4, or 5 in a case where the terminal 20 skips the PDCCH monitoring after receiving the PDCCH without limitation to Example 1.

In Example 2, when the terminal 20 receives a PDCCH (DCI) addressed to the terminal 20, the terminal 20 actually skips the PDCCH monitoring in a period that is set as PDCCH monitoring skip in Example 1 (or Examples 3, 4, and 5).

That is, when Example 1 is taken as an example, in a case where the terminal 20 can recognize that the received PDCCH (DCI) is addressed to the terminal 20 in a period to which the minimum scheduling offset value (> 0) is applied, the terminal 20 applies PDCCH monitoring skip.

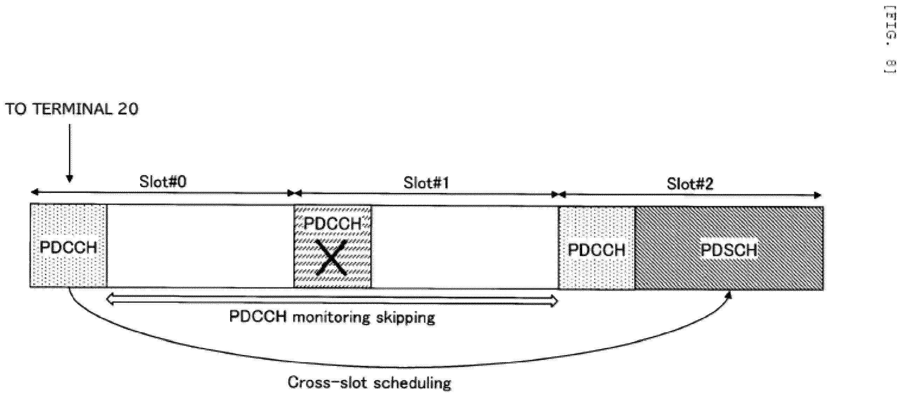

Fig. 8 illustrates an example of an operation of the terminal 20 in a case of applying Example 2 to Example 1-1. In Fig. 8, two slots are applied as the minimum scheduling offset value at a point of time of the slot #0 by the minimum applicable scheduling offset indicator received at a slot before the slot #0.

The terminal 20 receives the PDCCH addressed to the terminal 20 at the head portion of the slot #0. Since the terminal 20 grasps that the minimum scheduling offset value applied is two slots, the terminal 20 determines that the PDCCH monitoring is skipped from immediately after receiving the PDCCH at the slot #0 to the end of the slot #1.

From the viewpoint of the base station 10, in a period to which the minimum scheduling offset value (>0) is applied in the terminal 20, the base station 10 may determine that the PDCCH addressed to the terminal 20 is not transmitted at timing at which the terminal 20 applies PDCCH monitoring skip.

"Addressed to the terminal 20" include not only a PDCCH addressed to only the terminal 20 but also a PDCCH addressed to a plurality of terminals including the terminal 20 (including a case where a specific terminal is not identified).

For example, the PDCCH addressed to the terminal 20 may be set as a PDCCH that can be decoded by the terminal 20 by using any one RNTI among the following RNTIs.

### .SI-RNTI: System Information RNTI

- P-RNTI: Paging RNTI
- RA-RNTI: Random Access RNTI
- TC-RNTI: Temporary Cell RNTI
- C-RNTI: Cell RNTI
- MCS-C-RNTI: Modulation Coding Scheme Cell RNTI
- CS-RNTI: Configured Scheduling RNTI

### (Example 3)

Example 3 is premised on Example 1. However, Example 3 may be premised on Example 2, 4, or 5 in which the terminal 20 has a PDCCH monitoring skip application period without limitation to Example 1.

In Example 3, in a period to which PDCCH monitoring skip is applied, the terminal 20 does not unconditionally skip the PDCCH monitoring, and whether to skip (or not to skip) the PDCCH monitoring of which timing among PDCCH monitoring positions occurring in the period to which the PDCCH monitoring skip is applied is defined, or the base station 10 notifies the terminal 20 of whether or not to skip the PDCCH monitoring.

For example, "defined" represents that information indicating whether to skip (or not to skip) the PDCCH monitoring of which position among PDCCH monitoring positions occurring in the period to which the PDCCH monitoring skip is applied is described in specifications or the like, and the terminal 20 and the base station 10 retain the information in advance and determine skip application or skip non-application in accordance with the information. In addition, "the base station 10 notifies the terminal 20 of something" may be simply noted as "notified" or the like.

In a case where the base station 10 notifies the terminal 20 of the information, the notification may be performed with RRC signaling, MAC signaling, or DCI.

In addition, the PDCCH monitoring position is a time position (timing) of the PDCCH monitoring. However, the PDCCH monitoring position may be a time-frequency position of the PDCCH monitoring. Hereinafter, Example 3-1 to Example 3-3 will be described as more detail examples.

### <Example 3-1>

In Example 3-1, with respect to a PDCCH monitoring position included in a slot of a period, whether or not the PDCCH monitoring is to be skipped is defined or given in notification.

More specifically, for example, "information indicating that the PDCCH monitoring of a position included in an even (or odd) slot index may be skipped or should not be skipped" is defined or given in notification.

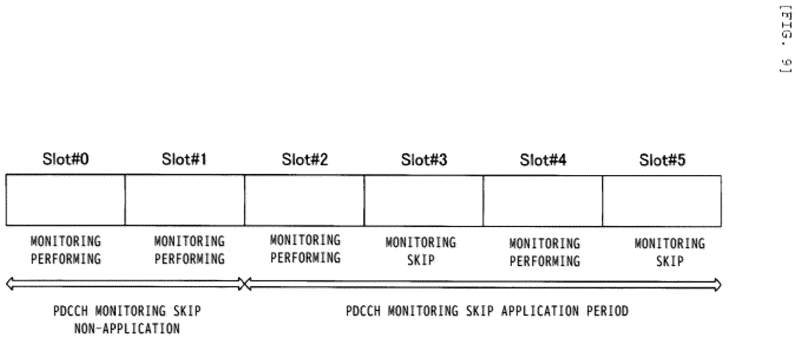

Fig. 9 is a view illustrating an operation example of the terminal 20 that operates in accordance with the definition or the notification in a case where the definition or the notification represents a case where "the PDCCH monitoring of a position included in an even slot index should not be skipped" or "the PDCCH monitoring of a position included in an odd slot index may be skipped". In the example in Fig. 9, a slot #2 to a slot #5 correspond to the PDCCH monitoring skip application period (for example, a period of the number of slots based on the minimum scheduling offset value).

For example, the terminal 20 grasps that the slot #2 to the slot #5 pertain to the PDCCH monitoring skip application period on the basis of the minimum scheduling offset value, but the terminal 20 performs the PDCCH monitoring at timing located in the slot #2 and the slot #4 and skips the PDCCH monitoring at timing located in the slot #3 and the slot #5 in accordance with the definition or the notification.

In addition, for example, information indicating "PDCCH monitoring at a position included in a slot index that is a multiple of an arbitrary number may be skipped or should not be skipped" may be defined or given in notification.

In this case, for example, when assuming that information indicating "PDCCH monitoring at a position included in a slot index that is a multiple of 3 may be skipped" is defined or given in notification, in a case where the application period of PDCCH monitoring skip in Fig. 9 is taken as an example, the terminal 20 skips PDCCH monitoring at timing located in a slot #3.

### <Example 3-2>

In Example 3-2, with respect to PDCCH monitoring located at an arbitrary symbol position in a slot, whether or not the PDCCH monitoring is to be skipped is defined or given in notification. Example 3-2 may be applied in Example 3 alone or may be applied in combination with Example 3-1 or Example 3-3.

As an example, with respect to respective slots in the PDCCH monitoring skip application period, information indicating "PDCCH monitoring at a position in symbols #0 to #3 should not be skipped and PDCCH monitoring at a position in symbols #4 to #13 may be skipped" may be defined or given in notification.

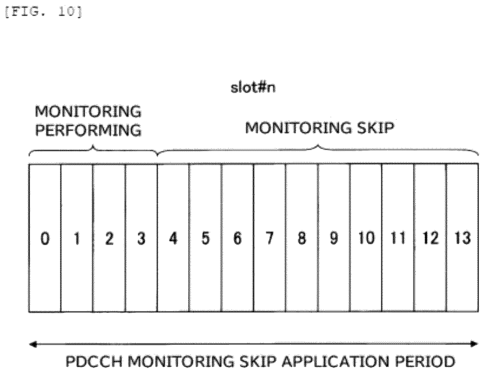

An example of this case is illustrated in Fig. 10. A slot #n in Fig. 10 represents a slot in the PDCCH monitoring skip application period. The terminal 20 conforming to the above-described definition or notification does not skip the PDCCH monitoring to be performed at any one timing among the symbols #0 to #3, and skips the PDCCH monitoring to be performed at any timing among symbols #4 to #13.

### <Example 3-3>

In Example 3-3, whether or not the PDCCH monitoring may be skipped or should not be skipped in correspondence with the type or the configuration of a search space to which the PDCCH monitoring corresponds may be defined or given in notification. Example 3-3 may be applied in Example 3 alone or may be applied in combination with Example 3-1 or Example 3-2.

For example, information shown in the following first example to third example may be defined or given in notification.

First Example: "Information indicating that the PDCCH monitoring corresponding to a system information search space, a paging search space, a random access search space, and the like should not be skipped". Note that, the system information search space is a search space for which the terminal 20 monitors a PDCCH that is scheduled for receiving system information with a PDSCH. This is also true of the paging search space, the random access search space.

Second Example: "Information indicating that PDCCH monitoring corresponding to a common search space set should not be skipped". Note that, the common search space is a domain (time-frequency domain) for which the terminal 20 mainly monitors the PDCCH for receiving SIB, an RACh message (Msg2, Msg4, and the like), paging, and the like.

Third Example: "Information indicating that PDCCH monitoring corresponding to a UE specific search space set may be skipped". Note that, the UE specific search space is a domain (time-frequency domain) for which the terminal 20 mainly monitors the PDCCH for receiving a PDSCH (data) addressed to the terminal 20.

As in the first example to the third example, in addition to definition or notification of whether or not the PDCCH monitoring is to be skipped in correspondence with the type of the search space and the like, the base station 10 may include configuration information designating whether or not the PDCCH monitoring corresponding to the search space may be skipped in search space configuration information transmitted to the terminal 20.

For example, in a case of configuring two search spaces including a search space ID=1, and a search space ID=2 with respect to the terminal 20, the base station 10 notifies the terminal 20 of setup information such as "search space ID=1, PDCCH monitoring skip = possible", and "search space ID=2, the PDCCH monitoring skip = impossible".

In a case where PDCCH monitoring timing for a search space that is the search space ID=1 corresponds to the PDCCH monitoring skip application period, the terminal 20 skips the PDCCH monitoring. Even in a case where PDCCH monitoring timing of the search space that is the search space ID=2 corresponds to the PDCCH monitoring skip application period, the terminal 20 does not skip the PDCCH monitoring.

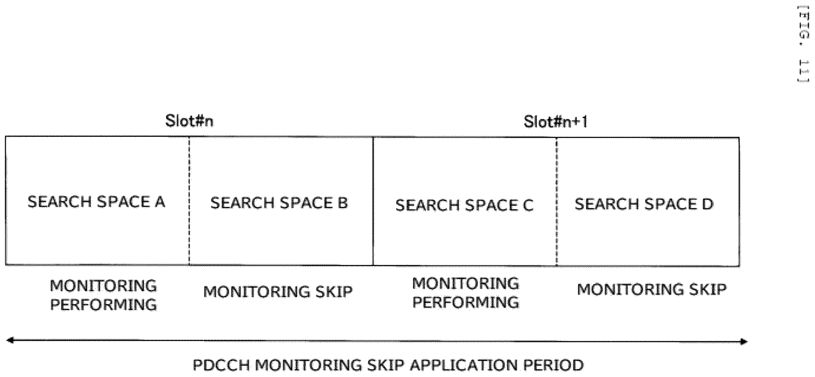

An example of an operation of the terminal 20 in Example 3-3 will be described with reference to Fig. 11. In the example in Fig. 11, it is assumed that the base station 10 has notified the terminal 20 of information indicating "skip of the PDCCH monitoring corresponding to a search space A or C is impossible, and skip of the PDCCH monitoring corresponding to a search space B or D is possible".

In this case, in the PDCCH monitoring skip application period, the terminal 20 performs the PDCCH monitoring at timing corresponding to the search space A or C and skips the PDCCH monitoring at timing corresponding to the search space B or D.

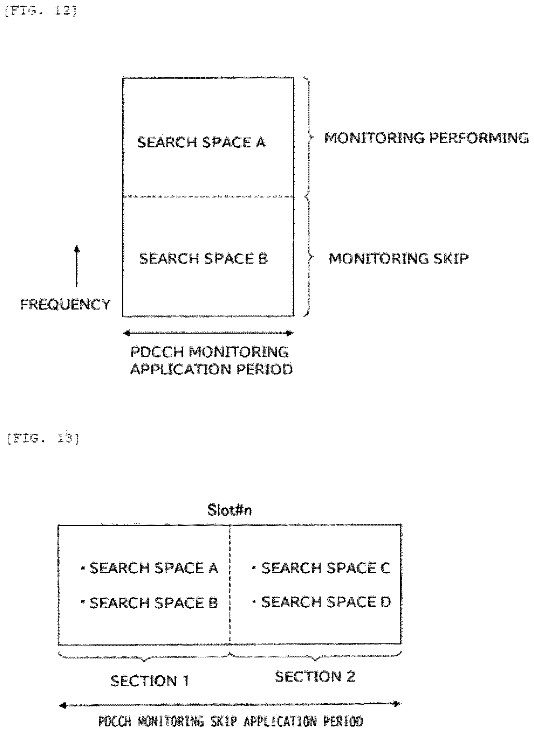

Another example of the operation of the terminal 20 in Example 3-3 will be described with reference to Fig. 12. In the example in Fig. 12, it is assumed that the base station 10 has notified the terminal 20 of information indicating "skip of the PDCCH monitoring corresponding to a search space A is impossible, and skip of the PDCCH monitoring corresponding to a search space B is possible".

In addition, in the search space A and the search space B, a time position is the same as each other, but a frequency position is different from each other. In this case, as illustrated in Fig. 12, the search space A and the search space B simultaneously correspond to a PDCCH monitoring application period.

In the PDCCH monitoring skip application period, the terminal 20 performs the PDCCH monitoring for the search space A and skips the PDCCH monitoring for the search space B.

Although related to the example described with reference to Fig. 12, description will be given of an operation example relating to a case where a plurality of kinds of PDCCH monitoring are set in the same position with respect to the terminal 20 with reference to Example 3-3-1 to Example 3-3-3. Here, a time position (timing) is also assumed for "position", but the "position" may be a time-frequency position. In addition, "the same position" includes not only a completely matching case but also a partially matching case.

### <Example 3-3-1>

In Example 3-3-1, the terminal 20 determines which PDCCH monitoring among the plurality of kinds of PDCCH monitoring at a plurality of PDCCH monitoring positions may be skipped or should not be skipped on the basis of a search space corresponding to the PDCCH monitoring. Information that becomes the base of the determination is defined or given in notification.

Specifically, the terminal 20 determines that among the plurality of kinds of PDCCH monitoring at the same position, skip of the PDCCH monitoring corresponding to an arbitrary search space is possible, and skip of the PDCCH monitoring corresponding to another arbitrary search space is impossible on the basis of the information that is defined or given in notification, and in this case, the terminal 20 performs PDCCH monitoring on only one side.

As an example, in a case where information indicating "skip of a search space that is searched with the C-RNTI is possible and skip of a search space that is searched with the P-RNTI is impossible in a case where the search space that is searched with the C-RNTI and the search space that is searched with the P-RNTI are set at the same position" is defined or given in notification, in a case of determining that the search space that is searched with the C-RNTI and the search space that is searched with the P-RNTI correspond to PDCCH monitoring of the same position, the terminal 20 does not perform the PDCCH monitoring with the C-RNTI and performs the PDCCH monitoring corresponding to the P-RNTI.

An operation example of Example 3-3-1 will be described with reference to Fig. 13. Fig. 13 illustrates a slot #n in the PDCCH monitoring skip application period as an example. In the example in Fig. 13, it is assumed that a search space A and a search space B exist at the same position in Section 1, and a search space C and a search space D exist at the same position in Section 2.

In addition, in a case where information indicating "skip of the search space A is possible and skip of the search space B is impossible in the PDCCH monitoring skip application period when the search space A and the search space B are set at the same position", and information indicating "skip of the search space C is possible and skip of the search space D is impossible in the PDCCH monitoring skip application period when the search space C and the search space D are set at the same position" are defined or given in notification, the terminal 20 performs the PDCCH monitoring of the search space B in Section 1, and performs the PDCCH monitoring of the search space D in Section 2.

### <Example 3-3-2>

In Example 3-3-2, in a case where even one PDCCH monitoring that should not be skipped is included, the terminal 20 determines that skip of the PDCCH monitoring at the corresponding position is impossible (PDCCH monitoring is performed).

In the example described with reference to Fig. 13, as described above, when assuming that information indicating "skip of the search space A is possible" and skip of the search space B is impossible", and information indicating "skip of the search space C is possible and skip of the search space D is impossible" are defined or given in notification, in Example 3-3-2, the terminal 20 performs all kinds of PDCCH monitoring of Section 1 and Section 2.

### <Example 3-3-3>

In Example 3-3-2, in a case where any one PDCCH monitoring that may be skipped is included, the terminal 20 determines that skip of all kinds of PDCCH monitoring at a corresponding position is possible.

In the example described with reference to Fig. 13, as described above, when assuming that information indicating "skip of the search space A is possible" and skip of the search space B is impossible", and information indicating "skip of the search space C is possible and skip of the search space D is impossible" are defined or given in notification, in Example 3-3-3, the terminal 20 skips all kinds of PDCCH monitoring of Section 1 and Section 2.

Note that, "in a case where any one PDCCH monitoring that should not be skipped is included, skip of all kinds of PDCCH monitoring at a corresponding position is impossible (PDCCH monitoring is performed)" or "in a case where any one PDCCH monitoring that may be skipped is included, skip of all kinds of PDCCH monitoring at a corresponding position is possible" may be defined or given in notification.

### (Example 4)

Next, Example 4 will be described. Example 4 may be carried out alone or may be carried out in combination with Example 1, 2, 3, or 5. In Example 4, when the cross-slot scheduling is set to the terminal 20, the terminal 20 applies PDCCH monitoring skip.

When the cross-slot scheduling is set to the terminal 20, a period during which the PDCCH monitoring may be skipped (for example: the number of slots) may be defined or given in notification in advance.

Notification of the period during which the PDCCH monitoring may be skipped may be performed with the RRC signaling, may be performed with the MAC signaling, or may be performed with the DCI.

"When the cross-slot scheduling is set" as described above represents a case as in example 1 or example 2 to be described below.

### <First Example>

In a first example, the terminal 20 sets a case where the minimum scheduling offset value applied to the terminal 20 is greater than 0 as "when the cross-slot scheduling is configured".

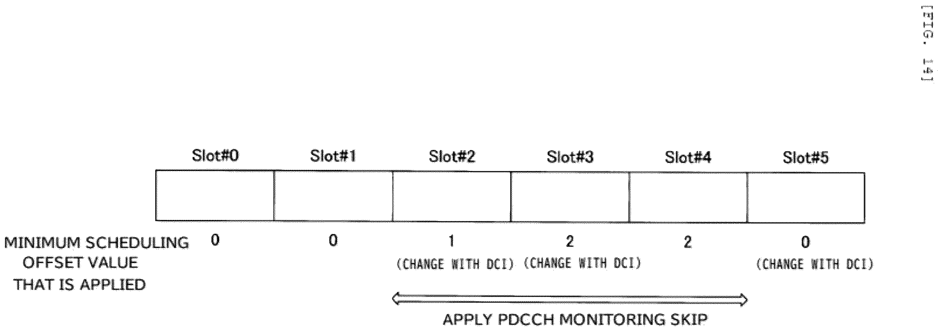

An operation example in the first example will be described with reference to Fig. 14. In the example in Fig. 14, in each slot, the minimum scheduling offset value is applied as illustrated in conformity to a minimum applicable scheduling offset indicator designated by a DCI that is received by the terminal 20 before the corresponding slot.

As illustrated, in a slot #2 to a slot #4, since the minimum scheduling offset value greater than 0 is applied, the terminal 20 determines the slot #2 to the slot #4 as a PDCCH monitoring skip application period, and skips the PDCCH monitoring at timing in the period. However, when Example 2 or Example 3 is applied, the PDCCH monitoring that is not skipped may be present even in this period.

In addition, for example, in a case where "a monitoring skip period is two slots" is defined or given in notification, for example, the terminal 20 determines the slot #2 and the slot #3 among the slot #2 to the slot #4 as the PDCCH monitoring skip application period.

### <Second Example>

In a second example, in a case where the scheduling offset (K0/K2) given in notification with the PDCCH (DCI) from the base station 10 is greater than 0, the terminal 20 applies the PDCCH monitoring skip.

The PDCCH monitoring skip application period may conform to the scheduling offset value (the number of slots), or may conform to a value defined or given in notification separately from the scheduling offset value (the number of slots).

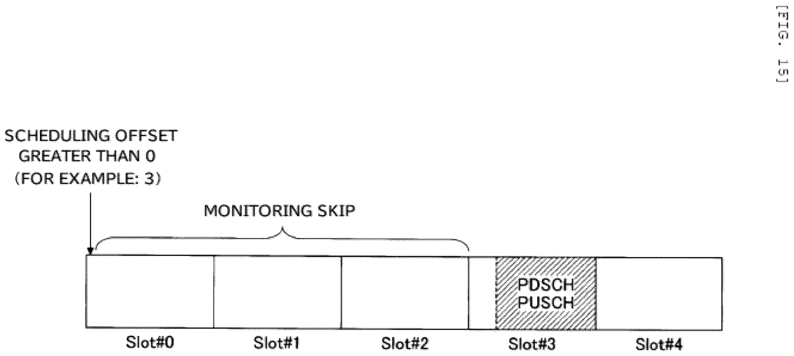

An operation example in the second example will be described with reference to Fig. 15. In the example in Fig. 15, the terminal 20 receives a DCI including notification indicating scheduling offset (K0/K2)=3 at the head of the slot #0. The DCI is a DCI for scheduling PDSCH/PUSCH illustrated in the slot #3 in the drawing.

In the example in Fig. 15, in conformity to 3 as the scheduling offset value, the terminal 20 applies the PDCCH monitoring skip up to a third slot counted from a slot receiving scheduling offset notification. However, when Example 3 is applied, the PDCCH monitoring that is not skipped even in this period may be present.

In addition, for example, in a case where "monitoring skip period is two slots" is defined or given in notification, for example, the terminal 20 determines the slot #0 and the slot #1 among the slot #0 to the slot #2 as the PDCCH monitoring skip application period.

### (Example 5)

Next, Example 5 will be described. Example 5 may be carried out along or may be carried out in combination with Example 1, 2, 3, or 4.

In Example 5, the base station 10 notifies the terminal 20 of whether or not to apply PDCCH monitoring skip. With regard to the notification, RRC parameters may be given in notification, notification may be given by an arbitrary field of the DCI, or notification may be given with MAC signaling.

As an example, the base station 10 notifies the terminal 20 of information indicating that PDCCH monitoring skip is applied, and a period during which PDCCH monitoring skip is applied with the DCI. The period during which PDCCH monitoring skip is applied may not be explicitly included in the DCI. In this case, for example, a value defined in advance may be applied.

In the period during which the PDCCH monitoring skip is applied, for example, the terminal 20 skips all kinds of PDCCH monitoring at timing at which monitoring is to be performed. In addition, in the period during which the PDCCH monitoring skip is applied, the terminal 20 may determine whether or not to perform the PDCCH monitoring by applying Example 3.

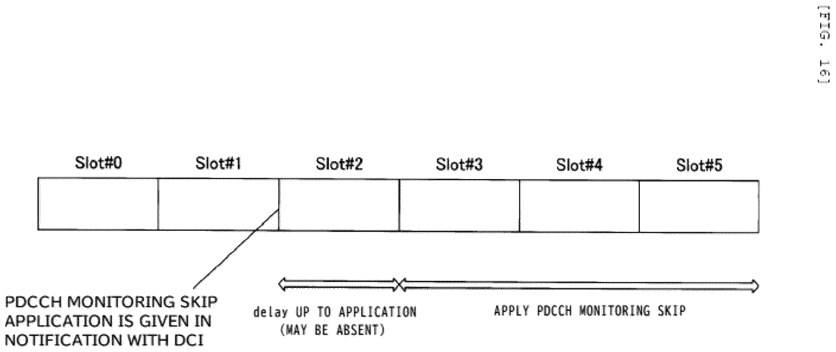

An operation example in Example 5 will be described with reference to Fig. 16. In the example in Fig. 16, at the head of the slot #2, the terminal 20 is notified of PDCCH monitoring skip application from the base station 10 with the DCI. In addition, here, it is assumed that "the PDCCH monitoring skip application period is three slots" is also given in notification with the DCI.

In this case, as illustrated in Fig. 16, the terminal 20 applies the PDCCH monitoring skip in a slot #3 to a slot #5 after delay time from reception (decoding) of the PDCCH (DCI) to the PDCCH monitoring skip application.

Note that, the delay time from reception (decoding) of the PDCCH (DCI) to the PDCCH monitoring skip application may be 0. That is, the terminal 20 may apply the PDCCH monitoring skip immediately after receiving the notification relating to the PDCCH monitoring skip application.

In addition, the delay time up to application of the PDCCH monitoring skip after receiving the notification relating to the PDCCH monitoring skip application may be defined or given in notification. The notification may be performed with RRC signaling, MAC signaling, or the DCI.

In addition, the terminal 20 may notify the base station 10 of the delay time up to application of the PDCCH monitoring skip after receiving the notification relating to the PDCCH monitoring skip application as UE capability, and the terminal 20 may apply the delay time that is given in the notification.

According to any of Example 1 to Example 5 described above, it is possible to reduce power consumption that occurs due to the PDCCH monitoring in a terminal.

### (Apparatus Configuration)

Next, description will be given of a functional configuration example of the base station 10 and the terminal 20 which execute the above-described processing and operations. The base station 10 and the terminal 20 are provided with functions for carrying out Example 1 to Example 5 described above. However, the base station 10 and the terminal 20 may be provided with functions of any one example among Example 1 to Example 5.

### <Base Station 10>

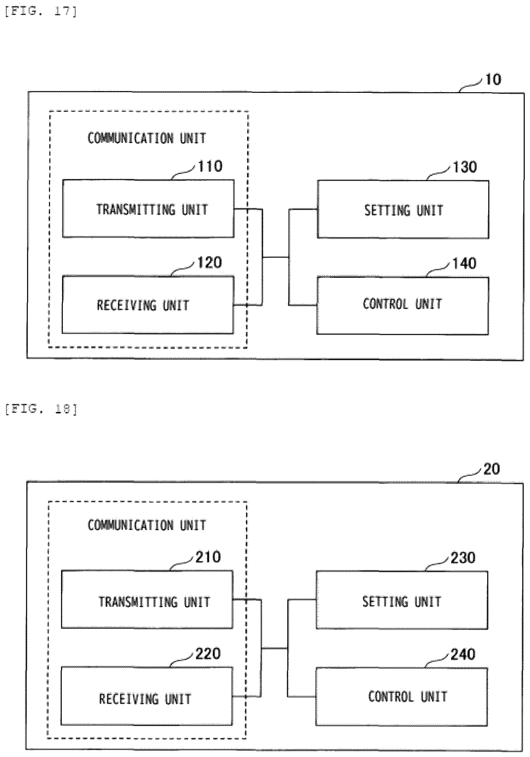

Fig. 17 is a view illustrating an example of a functional configuration of the base station 10. As illustrated in Fig. 17, the base station 10 includes a transmitting unit 110, a receiving unit 120, a setting unit 130, and a control unit 140. The functional configuration illustrated in Fig. 17 is illustrative only. A functional classification or the name of the functional units may be arbitrarily set as long as the operation according to this embodiment of the invention can be executed.

The transmitting unit 110 and the receiving unit 120 may be referred to as a communication unit.

The transmitting unit 110 includes a function of generating a signal that is transmitted to the terminal 20 side and wirelessly transmitting the signal. The receiving unit 120 includes a function of receiving various signals transmitted from the terminal 20, and acquiring, for example, information of a higher layer from the received signals. In addition, the transmitting unit 110 has a function of transmitting NR-PSS, NR-SSS, NR-PBCH, DL/UL control signals, DL data, and the like to the terminal 20. In addition, the transmitting unit 110 transmits the setup information described in Examples 1 to 5 or a notification with the DCI.

The setting unit 130 stores configuration information that is set in advance and various pieces of configuration information transmitted to the terminal 20 in a storage device, and reads out the various pieces of setup information from the storage device as necessary. The configuration information described in Examples 1 to 5 is read out from the setting unit 130 and is transmitted to the terminal 20 by the transmitting unit 110.

For example, the control unit 140 performs resource allocation, control of the entirety of the base station 10, and the like. Note that, a functional unit relating to signal transmission in the control unit 140 may be included in the transmitting unit 110, and a functional unit relating to signal reception in the control unit 140 may be included in the receiving unit 120. In addition, the transmitting unit 110 and the receiving unit 120 may be referred to as a transmitter and a receiver, respectively.

### <Terminal 20>

Fig. 18 is a view illustrating an example of a functional configuration of the terminal 20. As illustrated in Fig. 18, the terminal 20 includes a transmitting unit 210, a receiving unit 220, a setting unit 230, and a control unit 240. The functional configuration illustrated in Fig. 18 is illustrative only. A functional classification or the name of the functional units may be arbitrarily set as long as the operation according to this embodiment of the invention can be executed. The transmitting unit 210 and the receiving unit 220 may be referred to as a communication unit.

The transmitting unit 210 creates a transmission signal from transmission data, and wireless transmits the transmission signal. The receiving unit 220 wirelessly receives various signals, and acquires signals of a higher layer from a received physical layer signal.

The setting unit 230 stores various pieces of configuration information received from the base station 10 by the receiving unit 220 in a storage device, and reads out the various pieces of configuration information from the storage device as necessary. In addition, the setting unit 230 also stores configuration information that is set in advance. Examples of the contents of the configuration information include the configuration information described in Examples 1 to 5, and the like. The control unit 240 performs skip control described in Examples 1 to 5, and the like.

Note that, a functional unit relating to signal transmission in the control unit 240 may be included in the transmitting unit 210, and a functional unit relating to signal reception in the control unit 240 may be included in the receiving unit 220. In addition, the transmitting unit 210 and the receiving unit 220 may be referred to as a transmitter and a receiver, respectively.

According to the examples, at least, a terminal, a base station, and a monitoring method described, for example, in respective items described below are provided

### (Item 1)

A terminal including:
a receiving unit that receives a notification of a minimum scheduling offset value from a base station; and
a control unit that skips PDCCH monitoring in a period based on the minimum scheduling offset value after the receiving unit receives a PDCCH.

### (Item 2)

The terminal according to Item 1,
wherein in a case where the receiving unit receives a PDCCH addressed to the terminal, the control unit skips the PDCCH monitoring in the period based on the minimum scheduling offset value.

### (Item 3)

The terminal according to Item 1 or 2,
wherein the control unit determines PDCCH monitoring to be skipped in the period based on the minimum scheduling offset value on the basis of information that is defined, or information given in notification from the base station.

### (Item 4)

A terminal including:
a receiving unit that receives a notification of a minimum scheduling offset value greater than 0 from a base station; and
a control unit that skips PDCCH monitoring in a period to which the minimum scheduling offset value is applied.

### (Item 5)

A terminal including:
a receiving unit that receives a notification of a scheduling offset value greater than 0; and
a control unit that skips PDCCH monitoring in a period based on the scheduling offset value.

### (Item 6)

A terminal including:
a receiving unit that receives a notification indicating PDCCH monitoring skip application from a base station; and
a control unit that skips the PDCCH monitoring in a designated period after the receiving unit receives the notification.

### (Item 7)

A base station including:
a transmitting unit that transmits a notification of a minimum scheduling offset value to a terminal,
wherein the transmitting unit transmits information relating to PDCCH monitoring to be skipped in the terminal in a period based on the minimum scheduling offset value.

### (Item 8)

A base station including:
a transmitting unit that transmits a notification indicating PDCCH monitoring skip application to a terminal,
wherein in the terminal that receives the notification, the PDCCH monitoring is skipped in a designated period.

### (Item 9)

A monitoring method executed by a terminal, including:
receiving a notification of a minimum scheduling offset value from a base station; and
skipping PDCCH monitoring in a period based on the minimum scheduling offset value after receiving a PDCCH.

According to any of Item 1 to Item 9, it is possible to reduce power consumption that occurs due to PDCCH monitoring in a terminal.

### (Hardware Configuration)

The block diagrams (Fig. 17 and Fig. 18) which are used in description of the embodiment illustrate blocks in a function unit. The function blocks (constituent units) are realized by an arbitrary combination of at least one of hardware and software. In addition, means for realizing respective function blocks is not particularly limited. That is, the respective function blocks may be realized by one device that is physically or logically combined. In addition, two or more devices, which are physically or logically separated from each other, may be directly or indirectly connected (for example, in a wired manner, a wireless manner, or the like), and the respective function blocks may be realized by a plurality of the devices. The function blocks may be realized by combining software to the one device or the plurality of devices.

Examples of functions include determining, calculating, computing, processing, deriving, examining, searching, confirming, receiving, transmitting, outputting, accessing, solving, selecting, establishing, comparing, assuming, expecting, regarding, broadcasting, notifying, communicating, forwarding, configuring, reconfiguring, allocation (mapping), assigning, and the like, but there is no limitation thereto. For example, a function block (constituent unit) that realizes a transmission function is referred to as a transmitting unit or a transmitter. A realization method of any of the functions is not particularly limited as described above.

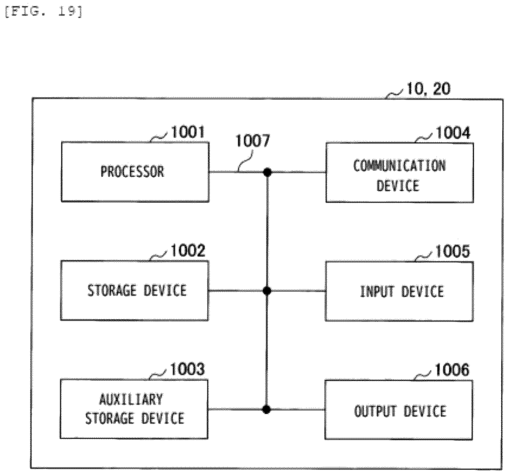

For example, any of the base station 10, the terminal 20, and the like in the embodiment of the present disclosure may function as a computer that performs processing of a radio communication method of the present disclosure. Fig. 19 is a view illustrating an example of a hardware configuration of the base station 10 and the terminal 20 according to the embodiment of the present disclosure. The base station 10 and the terminal 20 may be configured as a computer device that physically includes a processor 1001, a storage device 1002, an auxiliary storage device 1003, a communication device 1004, an input device 1005, an output device 1006, a bus 1007, and the like.

Note that, in the following description, a term "apparatus" may be read as a circuit, a device, a unit, or the like. The hardware configuration of the base station 10 and the terminal 20 may include the respective devices illustrated in the drawing one by one or in a plural number, or may not include a part of the devices.

Respective functions in the base station 10 and the terminal 20 are realized by loading predetermined software (program) on hardware such as the processor 1001 and the storage device 1002 so as to allow the processor 1001 to perform an arithmetic operation, and by controlling communication with the communication device 1004 or by controlling at least one of reading-out and writing of data in the storage device 1002 and the auxiliary storage device 1003.

For example, the processor 1001 allows an operating system to operate so as to control the entirety of the computer. The processor 1001 may be constituted by a central processing unit (CPU) that includes an interface with a peripheral device, a control device, an arithmetic operation device, a register, and the like. For example, the control unit 140, the control unit 240, and the like may be realized by the processor 1001.

In addition, the processor 1001 reads out a program (a program code), a software module, data, or the like from at least one of the auxiliary storage device 1003 and the communication device 1004 into the storage device 1002, and performs various kinds of processing according to the program, the software module, the data, or the like. As the program, a program that causes the computer to execute at least a part of the operations described in the embodiment is used. For example, the control unit 140 of the base station 10 illustrated in Fig. 17 may be realized by a control program that is accommodated in the storage device 1002 and operates by the processor 1001. In addition, for example, the control unit 240 of the terminal 20 illustrated in Fig. 18 may be realized by a control program that is accommodated in the storage device 1002 and operates by the processor 1001. The above-described various kinds of processing have been described to be executed by one processor 1001, but may be simultaneously or sequentially executed by two or more processors 1001. The processor 1001 may be mounted by one or more chips. Furthermore, the program may be transmitted from a network through electric communication line.

The storage device 1002 is a computer-readable recording medium, and may be constituted by, for example, at least one of a read only memory (ROM), an erasable programmable ROM (EPROM), an electrically erasable programmable ROM (EEPROM), a random access memory (RAM), and the like. The storage device 1002 may be referred to as a register, a cache, a main memory (main storage device), or the like. The storage device 1002 can retain a program (a program code), a software module, and the like which can be executed to carry out the communication method according to the embodiment of the present disclosure.

The auxiliary storage device 1003 is a computer-readable recording medium, and may be constituted by, for example, at least one of an optical disc such as a compact disc ROM (CD-ROM), a hard disk drive, a flexible disk, a magneto-optical disk (for example, a compact disk, a digital multi-purpose disk, and a Blu-ray (registered trademark) disk), a smart card, a flash memory (for example, a card, a stick, a key drive), a floppy (registered trademark) disk, a magnetic strip, and the like. The auxiliary storage device 1003 may be referred to as an auxiliary storage device. For example, the above-described storage medium may be a database including at least one of the storage device 1002 and the auxiliary storage device 1003, a server, and other appropriate media.

The communication device 1004 is hardware (transmitting and receiving device) that performs communication between computers through at least one of a wired network and a wireless network, and may be referred to as, for example, a network device, a network controller, a network card, a communication module, or the like. For example, the communication device 1004 may include a high-frequency switch, a duplexer, a filter, a frequency synthesizer, and the like to realize at least one of frequency division duplex (FDD) and time division duplex (TDD). For example, a transmitting and receiving antenna, an amplification unit, a transmitting and receiving unit, a transmission path interface, and the like may be realized by the communication device 1004. The transmitting and receiving unit may be mounted in a state of being physically or logically separated into a transmitting unit and a receiving unit.

The input device 1005 is an input device (for example, a keyboard, a mouse, a microphone, a switch, a button, a sensor, or the like) that receives an input from the outside. The output device 1006 is an output device (for example, a display, a speaker, an LED lamp, or the like) that performs output to the outside. Note that, the input device 1005 and the output device 1006 may have an integral configuration (for example, a touch panel).

In addition, respective devices such as the processor 1001 and the storage device 1002 are connected to each other through a bus 1007 for information communication. The bus 1007 may be configured by using a single bus, or by using buses different between devices.

In addition, the base station 10 and the terminal 20 may include hardware such as a microprocessor, a digital signal processor (DSP), an application specific integrated circuit (ASIC), a programmable logic device (PLD), and a field programmable gate array (FPGA), or a part or the entirety of respective function blocks may be realized by the hardware.
For example, the processor 1001 may be mounted by using least one piece of hardware.

### (Supplement of Embodiment)

Hereinbefore, description has been given of the embodiment of the invention. However, the disclosed invention is not limited to the embodiment, and it should be understood by those skilled in the art that various modification examples, various variation examples, various alternative examples, various substitution examples, and the like can be made. Description has been made by using a specific numerical example for comprehension of the invention, but numerical values are illustrative only, and arbitrary appropriate values may be used unless otherwise stated. The classification of the items in the above description is not essential in the invention, and details described in two or more items may be used in combination as necessary. In addition, details described in any item may be applied to details described in a different item (as long as inconsistency does not occur). It cannot be said that the boundary of the function units in the functional block diagrams or the processing units corresponds to a boundary of physical components. Operations of a plurality of function units may be performed physically with one component, or an operation of one function unit may be performed physically with a plurality of components. With regard to the procedures described in the embodiment, the order thereof may be changed as long as inconsistency does not occur. The base station 10 and the terminal 20 have been described by using functional block diagrams for convenience of processing explanation, but the devices may be realized by hardware, software, or a combination thereof. Software that operates by the processor provided to the base station 10 in accordance with the embodiment of the invention, and software that operates by the processor provided to the terminal 20 in accordance with the embodiment of the invention may be respectively stored in a random access memory (RAM), a flash memory, a read only memory (ROM), an EPROM, an EEPROM, a register, a hard disk drive (HDD), a removable disk, a CD-ROM, a database, a server, or other appropriate storage media.

In addition, information notification may be performed by other methods without limitation to the aspect and the embodiment described in the present disclosure. For example, the information notification may be performed by physical layer signaling (for example, downlink control information (DCI), and uplink control information (UCI)), higher layer signaling (for example, radio resource control (RRC) signaling, medium access control (MAC) signaling, notification information (master information block (MIB)), and system information block (SIB)), other signals, or a combination thereof. In addition, the RRC signaling may be referred to as an RRC message, and examples thereof include an RRC connection setup message, an RRC connection reconfiguration message, and the like.

The aspect and embodiment which are described in the present disclosure may also be applied to at least any one of long term evolution (LTE), LTE-Advanced (LTE-A), SUPER 3G, IMT-Advanced, 4th generation mobile communication system (4G), 5th generation mobile communication system (5G), future radio access (FRA), new radio (NR), W-CDMA (registered trademark), GSM (registered trademark), CDMA2000, ultra mobile broadband (UMB), IEEE 802.11 (Wi-Fi (registered trademark)), IEEE 802.16 (WiMAX (registered trademark)), IEEE 802.20, ultra-wideband (UWB), Bluetooth (registered trademark), other systems which use an appropriate system, and a next generation system that is extended on the basis of the systems. In addition, application can be made in combination of a plurality of the systems (for example, in combination of at least one of LTE and LTE-A, and 5G) .

With regard to the procedure, the sequence, the flowchart, and the like in the aspect and the embodiment which are described in this specification, the order thereof may be changed as long as inconsistency does not occur. For example, with regard to the method that is described in the present disclosure, elements of various steps are suggested in an exemplary order, and there is no limitation to the specific order that is suggested.

In this specification, a specific operation that is performed by the base station 10 may be performed by a higher node (upper node) according to circumstances. In a network including one or a plurality of network nodes including the base station 10, it is apparent that various operations which are performed for communication with the terminal 20 can be performed by at least one of the base station 10 and another network node (for example, MME, S-GW (golden week), or the like is considered, but there is no limitation thereto) other than the base station 10. In the above description, a case where another network node other than the base station 10 is one is exemplified, but the other network node may be a combination (for example, MME and S-GW (golden week)) of a plurality of other network nodes.

The information, the signal, and the like which are described in the present disclosure may be output from a higher layer (or a lower layer) to the lower layer (or the higher layer). The information, the signal, and the like may be input or output through a plurality of network nodes.

Information that is input or output, and the like may be stored in a specific location (for example, a memory), or may be managed by a management table. The information that is input or output, and the like may be subjected to rewriting, updating, or additional writing. The information that is output, and the like may be deleted. The information that is input, and the like may be transmitted to other devices.

Determination in the present disclosure may be performed by a value (0 or 1) that is expressed by one bit, may be performed in accordance with a truth value (Boolean: true or false), or may be performed through numerical value comparison (for example, comparison with a predetermined value).

Even when being referred to as software, firmware, middleware, microcode, hardware description language, or other names, the software should be broadly interpreted to mean instructions, instruction sets, codes, code segments, program codes, programs, subprograms, software modules, applications, software applications, software packages, routines, subroutines, objects, executable files, execution threads, procedures, functions, and the like.

In addition, the software, instructions, information, and the like may be transmitted or received through a transmission medium. For example, in a case where the software is transmitted from a web site, a server, or other remote sources by using at least one of a wired technology (a coaxial cable, an optical fiber cable, a twisted pair, a digital subscriber line (DSL), or the like) and a wireless technology (infrared, microwave, or the like), at least one of these wired and wireless technologies is included in the definition of the transmission medium.

The information, the signals, and the like, which are described in the present disclosure, may be expressed by using any one of other various technologies. For example, data, an instruction, a command, information, a signal, a bit, a symbol, a chip, and the like, which are stated over the entirety of the above description, may be expressed by a voltage, a current, an electromagnetic wave, a magnetic field or a magnetic particle, a photo field or a photon, or an arbitrary combination thereof.

Note that, terms described in the present disclosure and terms necessary for understanding of the present disclosure may be substituted with terms having the same or similar meaning. For example, at least one of the channel and the symbol may be a signal (signaling). In addition, the signal may be a message. In addition, the component carrier (CC) may be referred to as a carrier frequency, a cell, a frequency carrier, or the like.

The terms of "system" and "network" used in the present disclosure are compatibly used.

In addition, information, parameters, and the like which are described in the present disclosure may be expressed by using absolute values, may be expressed by using relative values from predetermined values, or may be expressed by using additional corresponding information. For example, the radio resource may be indicated by an index.

The names used for the above-described parameters are not restrictive in any way. In addition, mathematical formulas and the like using these parameters may be different from those explicitly disclosed in the present disclosure. Since various channels (for example, a PUSCH, a PUCCH, a PDCCH, and the like) and information elements can be identified by any suitable name, the various names allocated to these various channels and information elements are not limited names in any way.

In the present disclosure, terms such as a "base station (BS)", a "radio base station", a "base station", a "fixed station", a "NodeB", an "eNodeB (eNB)", a "gNodeB (gNB)", an "access point", a "transmission point", a "reception point", a "transmission and reception point", a "cell", a "sector", a "cell group", a "carrier", and a "component carrier" may be compatibly used. The base station may also be referred to as terms such as a macro cell, a small cell, a femto cell, and a pico cell.

The base station can accommodate one or a plurality of (for example, three) cells. In a case where the base station accommodates the plurality of cells, the entirety of a coverage area of the base station can be classified into a plurality of small areas, and each of the small areas can provide a communication service by a base station subsystem (for example, an indoor small base station (remote radio head (RRH)). A term of a "cell" or a "sector" represents a part or the entirety of a coverage area of at least one of the base station and the base station subsystem which provide the communication service in the coverage.

In the present disclosure, the terms such as a "mobile station (MS)", a "user terminal", a "user equipment (UE)", and a "terminal" can be compatibly used.

The mobile station may be defined by those skilled in the art as a subscriber station, a mobile unit, a subscriber unit, a wireless unit, a remote unit, a mobile device, a wireless device, a wireless communication device, a remote device, a mobile subscriber station, an access terminal, a mobile terminal, a terminal, a wireless terminal, a remote terminal, a handset, a user agent, a mobile client, a client, or several other appropriate terminologies.

At least one of the base station and the mobile station may be referred to as a transmission device, a reception device, a communication device, or the like. Note that, at least one of the base station and the mobile station may be a device mounted on a moving body, the moving body itself, or the like. The moving body may be a vehicle (for example, a car, an airplane, or the like), an unmanned moving body (for example, a drone, an automatic driving vehicle, or the like), or a robot (a manned type or an unmanned type). Note that, at least one of the base station and the mobile station includes a device that does not necessarily move during a communication operation. For example, at least one of the base station and the mobile station may be an Internet of thing (IoT) device such as a sensor.

In addition, the base station in the present disclosure may be read as a terminal. For example, the aspect/embodiment of the present disclosure may be applied to a configuration in which the communication between the base station and the terminal is substituted with communication between a plurality of terminals 20 (for example, may be referred to as a device-to-device (D2D), vehicle-to-everything (V2X), or the like). In this case, a function provided to the base station 10 may be set to a configuration of the terminal 20. In addition, words such as "up" and "down" may be read as words (for example, "side") corresponding to communication between terminals. For example, an uplink channel, a downlink channel, and the like may be read as a side channel.

Similarly, the terminal in the present disclosure may be read as a base station. In this case, the function provided in the terminal may be set as a configuration of the base station.

The term "determining" that is used in the present disclosure may include various operations. For example, the term "determining" may include regarding of judging, calculating, computing, processing, deriving, investigating, looking up (search, inquiry) (for example, looking up in a table, a database, or other data structures), or ascertaining as "determined", and the like. In addition, the "determining" may include regarding of receiving (for example, information receiving), transmitting (for example, information transmitting), input, output, or accessing (for example, accessing to data in a memory) as "determined", and the like. In addition, "determining" may include regarding of resolving, selecting, choosing, establishing, comparing, or the like as "determining". That is, "determining" includes regarding of any operation as "determined". In addition, "determining" may be read as "assuming", "expecting", "considering", or the like.

A term of "connected", "coupled", or any variation thereof represents any direct or indirect connection or coupling between two or more elements and can include presence of one or more intermediate elements between two "connected" or "coupled" elements. The coupling or connection between the elements may be physical, logical, or a combination thereof. For example, "connection" may be read as "access". In a case of being used in the present disclosure, it can be considered that the two elements are "connected" or "coupled" to each other by using at least one of one or more wires, a cable, and printed electrical connection, and by using electromagnetic energy having a wavelength in a radio frequency domain, a microwave domain, and an optical (both visible and invisible) domain as several non-limiting and non-inclusive examples.

A reference signal may be abbreviated as RS (reference signal), and may be referred to as a pilot in accordance with an applied standard.

Description of "on the basis of" in the present disclosure does not represent "only on the basis of" unless otherwise stated. In other words, description of "on the basis of" represents both "only on the basis of" and "at least on the basis of".

Any reference to elements which use a term such as "first" and "second" in the present disclosure does not generally limit the amount or the sequence of the elements. These terms can be used in the present disclosure as a convenient method of distinguishing two or more elements. Accordingly, reference to the first and second elements does not mean that only two elements can be employed, or that the first element must precede the second element in some way.

The "unit" in the configuration of each of the devices may be substituted with "portion", "circuit", "device", or the like.

In the present disclosure, in a case where "include", "including", and a modification thereof are used, these terms are intended as comprehensive terms similar to "comprising". In addition, a term "or" that is used in the present disclosure is not intended as an exclusive-OR.

A radio frame may be configured by one or a plurality of frames in a time domain. The one or the plurality of frames in the time domain may be referred to as a subframe. The subframe may be further configured by one or a plurality of slots in the time domain. The subframe may be a fixed time length (for example, 1 ms) that does not depend on numerology.

The numerology may be a communication parameter that is applied to at least one of transmission and reception of an arbitrary signal or channel. For example, the numerology may represent at least one of a subcarrier spacing (SCS), a bandwidth, a symbol length, a cyclic prefix length, a transmission time interval (TTI), the number of symbols per the TTI, a radio frame configuration, specific filtering processing performed by a transceiver in a frequency domain, specific window INGNI processing performed by the transceiver in the time domain, and the like.

The slot may be configured by one or a plurality of symbols (orthogonal frequency division multiplexing (OFDM) symbols, single carrier frequency division multiple access (SC-FDMA) symbols, or the like) in a time domain. The slot may be a time unit based on the numerology.

The slot may include a plurality of mini slots. Each of the mini slots may be configured by one or a plurality of symbols in the time domain. In addition, the mini slot may be referred to as a sub-slot. The mini slot may be configured by symbols in a number smaller in comparison to the slot. A PDSCH (or a PUSCH) that is transmitted in a time unit greater than the mini slot may be referred to as a PDSCH (or PUSCH) mapping type A. The PDSCH (or PUSCH) transmitted by using the mini slot may be referred to as a PDSCH (or PUSCH) mapping type B.

Any of the radio frame, the subframe, the slot, the mini slot, and the symbol represent a time unit when transmitting signals. With regard to the radio frame, the subframe, the slot, the mini slot, and the symbol, additional names corresponding thereto may be used.

For example, one subframe may be referred to as a transmission time interval (TTI), a plurality of continuous subframes may be referred to as the TTI, or one slot or one mini slot may be referred to as the TTI. That is, at least one of the subframe and the TTI may be a subframe (1 ms) in existing LTE, may be a period (for example, 1 to 13 symbols) shorter than 1 ms, or may be a period longer than 1 ms. Note that, a unit indicating the TTI may be referred to as a slot, a mini slot, or the like instead of the subframe.

Here, for example, the TTI represents a minimum time unit of scheduling in the radio communication. For example, in an LTE system, the base station performs scheduling for allocating a radio resource (a frequency bandwidth, transmission power, or the like that can be used in each terminal 20) to each terminal 20 in a TTI unit. Note that, definition of the TTI is not limited thereto.

The TTI may be a transmission time unit such as a channel encoded data packet (transport block), a code block, and a codeword, or may be a processing unit of scheduling, link, and adaptation. Note that, when the TTI is given, the time interval (for example, the number of symbols) in which the transport block, the code block, the codeword, or the like is actually mapped may be shorter than the TTI.

Note that, in a case where one slot or one mini slot is referred to as the TTI, one or more TTIs (that is, one or more slots or one or more mini slots) may be the minimum time unit of the scheduling. In addition, the number of slots (the number of mini slots) constituting the minimum time unit of the scheduling may be controlled.

The TTI having a time length of 1 ms may be referred to as a typical TTI (TTI in LTE Rel. 8-12), a normal TTI, a long TTI, a typical subframe, a normal subframe, a long subframe, a slot, or the like. A TTI shorter than the typical TTI may be referred to as a shortened TTI, a short TTI, a partial TTI (or fractional TTI), a shortened subframe, a short subframe, a mini slot, a subslot, a slot, or the like.

Note that, the long TTI (for example, the typical TTI, the subframe, and the like) may be read as a TTI having a time length longer than 1 ms, and the short TTI (for example, the shortened TTI and the like) may be read as a TTI having a TTI length that is less than the TTI length of the long TTI and equal to or greater than 1 ms.

The resource block (RB) is a resource allocation unit of the time domain and the frequency domain and may include one subcarrier or a plurality of continuous subcarriers in the frequency domain. The number of subcarriers included in the RB may be the same regardless of the numerology, and may be, for example, 12. The number of subcarriers included in the RB may be determined on the basis of the numerology.

In addition, the time domain of the RB may include one or a plurality of symbols, and may be a length of one slot, one mini slot, one subframe, or one TTI. The one TTI, the one subframe, and the like may be configured one or a plurality of resource blocks.

Note that, one or a plurality of RBs may be referred to as a physical resource block (PRB: physical RB), a sub-carrier group (SCG), a resource element group (REG), a PRB pair, an RB pair, or the like.

In addition, the resource block may be configured by one or a plurality of resource elements (REs). For example, 1 RE may be a radio resource domain of one subcarrier and one symbol.

A bandwidth part (BWP) (may be referred to as a partial bandwidth or the like) may represent a subset of continuous common resource blocks (RB) which are continuous for an arbitrary numerology in an arbitrary carrier. Here, the common RB may be specified by an index of an RB with a common reference point of the carrier set as a reference. The PRB may be defined by an arbitrary BWP, and may be numbered in the BWP.

The BWP may include BWP for UL (UL BWP) and BWP for DL (DL BWP). With respect to the UE, one or a plurality of BWPs may be set in one carrier.

At least one of the BWPs which are set may be active, and the UE may not assume that a predetermined signal/channel is transmitted and received at the outside of the active BWP. Note that, "cell", "carrier", and the like in the present disclosure may be read as "BWP".

The structure of the radio frame, the subframe, the slot, the mini slot, the symbol, and the like is illustrative only. For example, the configuration of the number of subframes included in the radio frame, the number of slots per the subframe or the radio frame, the number of the mini slots included in the slot, the number of symbols and RBs included in the slot or the mini slot, the number of subcarriers included in the RB, the number of symbols in the TTI, the symbol length, the cyclic prefix (CP) length, and the like can be changed in various manners.

In the present disclosure, for example, in a case where articles such as "a", "an", and "the" are added in translation, nouns subsequent to the articles are intended to include a plural form.

In the present disclosure, a term of "A and B are different" may represent "A and B are different from each other". Note that, the term may represent "A and B are different from C". Terms such as "separated" and "coupled" may be interpreted in the same manner as in "different".

The aspect and the embodiment which are described in the present disclosure may be used alone or in combination thereof, or may be switched and used in accordance with execution. In addition, notification of predetermined information (for example, notification of "a fact of X") is not limited to the explicit notification, and may be performed in an implicit manner (for example, notification of the predetermined information is not performed).

Note that, in the present disclosure, the SS block or the CSI-RS is an example of a synchronization signal or a reference signal.

Hereinbefore, the present disclosure has been described in detail, but it is apparent by those skilled in the art that the present disclosure is not limited to the embodiment described in the present disclosure. The present disclosure can be executed as a variation aspect and a modification aspect without departing from the gist and the scope of the present disclosure which are determined by description of the appended claims. Accordingly, description in the present disclosure is made for exemplary explanation, and does not have any limiting meaning with respect to the present disclosure.

### EXPLANATIONS OF LETTERS OR NUMERALS

- 10: BASE STATION
- 110: TRANSMITTING UNIT
- 120: RECEIVING UNIT
- 130: SETTING UNIT
- 140: CONTROL UNIT
- 20: TERMINAL
- 210: TRANSMITTING UNIT
- 220: RECEIVING UNIT
- 230: SETTING UNIT
- 240: CONTROL UNIT
- 1001: PROCESSOR
- 1002: STORAGE DEVICE
- 1003: AUXILIARY STORAGE DEVICE
- 1004: COMMUNICATION DEVICE
- 1005: INPUT DEVICE
- 1006: OUTPUT DEVICE

## Claims

1. A terminal comprising:
a receiving unit that receives a notification of a minimum scheduling offset value from a base station; and
a control unit that skips PDCCH monitoring in a period based on the minimum scheduling offset value after the receiving unit receives a PDCCH.

2. The terminal according to claim 1,
wherein in a case where the receiving unit receives a PDCCH addressed to the terminal, the control unit skips the PDCCH monitoring in the period based on the minimum scheduling offset value.

3. The terminal according to claim 1 or 2,
wherein the control unit determines PDCCH monitoring to be skipped in the period based on the minimum scheduling offset value on the basis of information that is defined, or information given in notification from the base station.

4. A terminal comprising:
a receiving unit that receives a notification indicating PDCCH monitoring skip application from a base station; and
a control unit that skips the PDCCH monitoring in a designated period after the receiving unit receives the notification.

5. A base station comprising:
a transmitting unit that transmits a notification of a minimum scheduling offset value to a terminal,
wherein the transmitting unit transmits information relating to PDCCH monitoring to be skipped in the terminal in a period based on the minimum scheduling offset value.

6. A monitoring method executed by a terminal, comprising:
receiving a notification of a minimum scheduling offset value from a base station; and
skipping PDCCH monitoring in a period based on the minimum scheduling offset value after receiving a PDCCH.
